# NOUVEAU FASCICULE DE BREVET EUROPEEN

(11) **EP 1 059 851 B2**
(45) Date de publication et mention de la décision concernant l'opposition: **17.04.2013**
(45) Mention de la délivrance du brevet: 08.05.2002
(21) Numéro de dépôt: 99907661.5
(22) Date de dépôt: 04.03.1999
(51) Int. Cl.: A23L 1/48, A23L 1/03, A23C 9/13, A23C 11/10, A23C 13/14

(54) **SUSPENSION HOMOGENE STABLE DEPOURVUE D'EMULSIFIANT, SON PROCEDE DE PREPARATION ET SON UTILISATION DANS DES COMPOSITIONS ALIMENTAIRES**
HOMOGENE UND STABILE SUSPENSION OHNE EMULGIERMITTEL,VERFAHREN ZU IHRER HERSTELLUNG UND IHRE VERWENDUNG IN NAHRUNGSMITTELZUSAMMNENSETZUNGEN
STABLE HOMOGENEOUS EMULSIFIER-FREE SUSPENSION, PREPARATION METHOD AND USES IN FOOD COMPOSITIONS

(30) Priorité: 05.03.1998 FR 9802707
(43) Date de publication de la demande: 20.12.2000
(73) Titulaire: COMPAGNIE GERVAIS DANONE, 75009 Paris (FR)
(72) Inventeur: DOAT, Stéphane, F-92290 Chatenay Malabry (FR); WEILL, Ricardo, Pcia de Buenos-Aires (AR)
(74) Mandataire: Grosset-Fournier, Chantal Catherine
(86) Numéro de dépôt international: PCT/FR1999/000496
(87) Numéro de publication internationale: WO 1999/044442

(56) Documents cités:
- EP-A- 0 092 076
- WO-A-92/19640
- WO-A-96/38047
- FR-A- 2 240 717
- US-A- 4 195 084
- US-A- 5 244 887
- DATABASE WPI Section Ch, Week 8140 Derwent Publications Ltd., London, GB; Class A88, AN 81-73090D XP002088720 & SU 794 018 A (LENINGRAD FORESTRY ACAD)
- DATABASE WPI Section Ch, Week 8123 Derwent Publications Ltd., London, GB; Class D13, AN 81-41212D XP002088721 -& JP 56 042546 A (NISSHIN OIL MILLS LTD) , 20 avril 1981

## Description

La présente invention concerne l'incorporation de produits à point de fusion élevé et/ou hydrophobes, et notamment dotés d'une activité biologique d'intérêt, dans des compositions présentant une teneur élevée en eau.

Plus particulièrement, l'invention se rapporte à une suspension homogène, stable, de produits à point de fusion élevé et/ou hydrophobes dépourvue d'émulsifiant.

En effet, pour améliorer les propriétés diététiques de produits à usage alimentaire, on est amené à incorporer de petites quantités d'ingrédients ayant une activité favorable sur le métabolisme ; toutefois, les caractéristiques organoleptiques et microbiologiques des produits doivent être préservées.

Parmi les substances à activité biologique, les phytostérols et leurs dérivés présentent un intérêt particulier en raison de leurs propriétés physiologiques et pharmacologiques ; en effet, il a été montré que certains de ces composés ont une activité hypocholestérolémiante lorsqu'ils sont absorbés de façon régulière. Il a donc été préconisé de préparer des stérols en quantité appropriée pour les utiliser à des fins diététiques, en vue de diminuer le taux de cholestérol sanguin. Ces stérols sont obtenus notamment à partir des fractions insaponifiables issues de la saponification des huiles et graisses animales et végétales.

Les deux grandes approches envisagées à ce jour pour l'incorporation de phytostérols et leurs dérivés dans des compositions alimentaires ou pharmaceutiques font appel respectivement à la solubiiisation de phytostérols et de leurs dérivés dans les phases lipidiques d'un milieu à teneur élevée en matière grasse, le taux de matière grasse étant toutefois supérieur à 20 %, et/ou à l'utilisation d'agents émulsifiants.

Plusieurs publications ont ainsi décrit l'incorporation de ces composés dans des compositions ayant une teneur élevée en matière grasse.

La demande internationale WO92/19640 décrit des produits alimentaires contenant des β-sitostanol esters et de la matière grasse à un taux supérieur à 50%.

La demande de brevet japonais n° 2.299.548 décrit un biscuit contenant des phytostérols et son procédé de fabrication, soit par utilisation d'une huile enrichie en β-sitostérol en mélange avec de la farine avant le mélange des autres ingrédients, soit par mélange préalable des phytostérols avec du blanc d'oeuf avant l'introduction des autres ingrédients.

Toutefois, il serait préférable de pouvoir les incorporer dans des aliments ayant une teneur réduite en matière grasse et présentant des qualités diététiques reconnues, tels que les produits laitiers, fermentés ou non. Une telle incorporation pose alors des difficultés inhérentes aux caractéristiques physico-chimiques des phytostérols et aux contraintes propres à ce type de produits alimentaires, généralement classés dans les produits frais.

Le brevet US 3.085.939 décrit des compositions pharmaceutiques contenant du sitostérol qui sont stabilisées par la présence d'émulsifiants et d'un matériau colloïde évitant le contact entre le sitostérol et l'huile.

Le brevet US 4.195.084 décrit des suspensions pharmaceutiques contenant des sitostérols dont le goût et la stabilité sont rendus acceptables par la présence combinée d'agent chélatant, de carboxyméthyl-cellulose, de sorbitol, d'émulsifiant et de siméthicone.

Le recours à de tels adjuvants n'est pas admissible dans des produits à usage alimentaire, consommés en quantité importante par des sujets sains.

Cependant, comme il a été dit plus haut, l'incorporation de substances à point de fusion élevé et/ou hydrophobes, dans un produit laitier fini à forte teneur en eau et faible teneur en matière grasse, tout en préservant leurs propriétés, sans avoir recours à ces adjuvants pose des problèmes techniques qui n'avaient pas été résolus jusqu'à ce jour.

En effet, il n'est pas possible, à ce jour, d'incorporer des substances hydrophobes à point de fusion élevé au début du procédé de fabrication d'un produit laitier à forte teneur en eau et à faible teneur en matière grasse. D'une part, leur hydrophobicité les empêche de se dissoudre dans le mélange initial, essentiellement aqueux et, d'autre part, leur point de fusion est supérieur à la température généralement rencontrée dans les procédés de préparation des produits laitiers et ne permet pas de les faire fondre. On est alors confronté à un problème de répartition hétérogène dans le produit laitier en question.

Par ailleurs, ces substances hydrophobes à point de fusion élevé se présentent généralement sous forme d'une poudre dont la granulométrie est importante. Leur incorporation, à la fin du procédé de préparation du produit laitier à forte teneur en eau et à faible teneur en matière grasse, n'est donc pas envisageable, car elle entraînerait une impression sableuse en bouche due à la taille des particules de poudre. De plus, on risquerait d'être confronté à des problèmes de contamination microbiologique.

De manière inattendue, on a maintenant trouvé que de telles compositions, présentant des caractéristiques organoleptiques et microbiologiques satisfaisantes, peuvent être obtenues en l'absence des adjuvants requis dans la technique antérieure, et notamment d'émulsifiants.

L'objet de l'invention est de proposer des suspensions homogènes stables, dépourvues d'émulsifiant, contenant des substances hydrophobes et/ou de point de fusion supérieur à 130°C, dans un milieu aqueux et qui peuvent servir d'intermédiaire dans la préparation des compositions alimentaires de l'invention.

C'est pourquoi, la présente invention concerne une suspension homogène stable dépourvue d'émulsifiant:
- d'au moins une substance hydrophobe et/ou dont le point de fusion est supérieur à 130°C choisie parmi les phystostérols, les phytostanols et leurs dérivés estérifiés respectifs et notamment les composés choisis parmi: 5,7,22-cholestatrienol, 7-dehydrocholesterol, 22-dehydrocholesterol, 24-dehydrocholesterol, zymosterol, Δ7-cholesterol, 7-coprostenol, cholestanol, coprostanol, epicoprostanol, cerebrosterol, 22-α-oxycholesterol, 22-dihydroerogosterol, 7,24(28)-erogostadienol, campesterol, neospongosterol,
   7-ergostenol, cerebisterol, corbisterol, stigmasterol, focosterol, α-spinasterol, sargasterol, 7-dehydrocryonasterol, poriferasterol, chondrillasterol, β-sitosterol, cryonasterol (γ-sitosterol), 7-stigmasternol, 22-stigmastenol, dihydro-γ-sitosterol, β-sitostanol, 14-dehydroergosterol, 24(28)-dehydroergosterol, ergosterol, brassicasterol, 24-methylenecholesterol, ascosterol, episterol, fecosterol et 5-dihydroergosterol, et leurs mélanges et est avantageusement le β-sitostérol, le β-sitostanol, le β-sitostanol ester, le campesterol ou le brassicasterol,
- d'un épaississant choisi parmi : la gomme xanthane, les carraghénanes, les pectines, l'amidon, notamment gélatinisé, la gomme gélane ou la cellulose et ses dérivés à une concentration telle que la viscosité de la suspension est de 0,05 Pas à 0,15 Pas, notamment de 0,05 Pas à 0,1 Pas, et
- des lipides en quantité inférieure à 5%,
dans un milieu aqueux.

On s'est aperçu que l'épaississant confère à la solution aqueuse une viscosité permettant de maintenir les particules d'une substance hydrophobe et/ou dont le point de fusion est supérieur à 130°C en suspension selon une répartition homogène.

La taille des particules des stérols utilisés est d'60 µm à 1 mm, et généralement 85% des particules ont une granulométrie comprise entre 90 et 185 µm.

Dans le cadre de l'invention, le β-sitostérol ou le β-sitostanol sont avantageusement utilisés.

Par épaississant, on définit une famille d'ingrédients alimentaires utilisés généralement comme additifs technologiques afin d'accroître la viscosité du milieu. Ces ingrédients sont généralement des polymères hydrophiles qui, lorsqu'ils sont introduits dans un milieu aqueux, sont capables d'absorber de l'eau et donc d'augmenter de volume, développant ainsi de la viscosité.

Dans les suspensions homogènes stables de l'invention, la substance hydrophobe de/ou dont le point de fusion est supérieur à 130°C, ne peut pas jouer le rôle d'émulsifiant car elle est en suspension en phase aqueuse.

La viscosité peut être mesurée par des méthodes connues de l'homme de métier et notamment par un rhéomat 108 (Marque Gontraves) à un cisaillement de 1290 s⁻¹.

S'agissant de la viscosité, si elle est inférieure à 0.05 Pas, la solution ne présente pas suffisamment de viscosité pour maintenir les particules de la substance hydrophobe et/ou dont le point de fusion est supérieur à 130°C, notamment les phytostérols, en suspension.

Si la viscosité est supérieure à 0.15 Pas, la solution devient visqueuse et on ne peut pas garantir un écoulement.

Selon un mode de réalisation avantageux, l'invention concerne une suspension aqueuse telle que définie ci-dessus, contenant de 0,01 % (p/v) à 10% (p/v) d'épaississant et de 0,1% (p/v) à 30% (p/v) de substance hydrophobe et/ou dont le point de fusion est supérieur à 130°C.

Selon un autre mode de réalisation, la suspension aqueuse de l'invention contient de 0,5 à environ 20 % (p/v) de substance hydrophobe et/ou dont le point de fusion est supérieur à 130°C.

Il peut être intéressant d'ajouter des lipides lorsque la substance hydrophobe et/ou dont le point de fusion est supérieur à 130°C est présente en quantité supérieure à 2%, ce qui aide à homogénéiser la suspension et à la rendre plus pompable.

L'invention concerne également un procédé de préparation d'une suspension homogène stable telle que définie ci-dessus, dans lequel :
- on prépare une solution présentant une viscosité de 0,05 Pas à 0,15 Pas, en mélangeant une solution aqueuse avec un épaississant,
- on additionne à la solution visqueuse obtenue à l'étape précédente une substance hydrophobe et/ou dont le point de fusion est supérieur à 130°C, à une concentration telle que la concentration dans la solution visqueuse soit de 0,1% à 30% p/v
pour obtenir une suspension homogène stable dépourvue d'émulsifiant.

A titre d'illustration du procédé de préparation de la solution homogène stable définie ci-dessus, on ajoute dans de l'eau chaude (50-60°C) un épaississant pour obtenir une solution présentant une viscosité comprise entre 0.05 Pas (limite basse pour le maintien en suspension) et 0.15 Pas (limite haute pour garantir un écoulement). La viscosité est mesurée sur un rhéomat 108 à un cisaillement de 1290 s⁻¹. On ajoute ensuite progressivement et sous agitation manuelle ou à l'aide d'un mélangeur 50-100 rpm en prenant soin de ne pas incorporer d'air, la poudre de phytostérol. Le réseau créé par les molécules d'épaississant et la viscosité de la solution aqueuse permettent de maintenir les particules de phytostérol en suspension selon une répartition homogène.

Les suspensions homogènes stables de l'invention sont avantageusement utilisées dans des compositions alimentaires nouvelles, où la composition alimentaire est substantiellement dépourvue d'émulsifiant, dans laquelle la teneur en eau est d'au moins 60%, comprenant une suspension homogène stable telle que définie ci-dessus, à raison de 0,5% à 30% notamment à raison de 1% à 25%, et une composition fluide contenant au moins 60% d'eau et ne contenant pas plus de 18% de matières grasses, à raison de 75% à 99,5 %.

A titre d'exemple, dans une composition alimentaire contenant 99,5 % de composition fluide dont la teneur en matières grasses est de 18 %, le taux de matières grasses dans la composition alimentaire est de 17,9 %, ce qui correspond bien à une teneur en matières grasses inférieure à 20 %. Toutefois, on fera varier le taux de matière grasse de la composition fluide en fonction de la quantité de suspension aqueuse. Par exemple, on mélangera 25 % de suspension aqueuse avec 75 % de composition fluide contenant moins de 27 % de matière pour obtenir une composition alimentaire dont la teneur en - matière grasse finale est inférieure à 20 %.

Les pourcentages sont des pourcentages en poids.

Dans cette composition alimentaire, la suspension homogène stable définie ci-dessus est présente à raison de 0,5 à 20 %.

Dans ce qui suit, la composition fluide est également désignée par "mix".

Dans ces compositions alimentaires de l'invention, la teneur en substance hydrophobe et/ou dont le point de fusion est supérieur à 130°C est de 0,001 à 7,5%, notamment de 0,4% à 2%.

Dans cette composition alimentaire, la teneur en substance hydrophobe et/ou dont le point de fusion est supérieur à 130°C, est de 0,05 à 4 %.

Ces compositions alimentaires de l'invention contiennent des protéines en quantité inférieure à 10%, notamment à 4%.

Ces compositions alimentaires de l'invention contiennent des hydrates de carbone à raison de 4 à 20%.

Ces compositions alimentaires sont dépourvues des éléments suivants : agents chélatants, agents susceptibles d'inhiber la fermentation et agents conservateurs.

Pour fixer les idées, ces compositions sont avantageusement dépourvues d'agent chélatant, de carboxyméthylcellulose de sodium, d'agent tensioactif et de siméthicone.

Ces compositions alimentaires sont telles que la composition fluide est constituée essentiellement de lait ou ses dérivés tels que le lactosérum, d'origine animale ou végétale.

A titre d'exemple, on peut citer le lait de soja, le lait d'amande ou une préparation liquide végétale obtenue à partir de céréales (avoine, riz, orgeat).

Ces compositions alimentaires peuvent avantageusement contenir des bactéries lactiques.

Le procédé de préparation de cette composition alimentaire comprend les étapes suivantes :
- on prépare une suspension homogène stable par mélange d'une solution aqueuse, d'une substance hydrophobe et/ou présentant un point de fusion supérieur à 130°C, et d'un épaississant,
- on mélange la suspension homogène stable avec une composition fluide dont la teneur en eau est d'au moins 60% et ne contenant pas plus de 18% de matières grasses, à une température de 60°C à 80°C,
- on soumet le mélange obtenu à l'étape précédente à une homogénéisation sous une pression de 50 à 500 bar pour obtenir une dispersion homogénéisée stable dans laquelle les particules constituant la substance hydrophobe et/ou dont le point de fusion est supérieur à 130°C, sont broyées à une taille de 50 µm à 100 µm.
Ce procédé est exclu de la portée de l'invention.

La suspension est mélangée à une composition fluide (mix) pendant l'étape de traitement thermique, juste avant l'étape d'homogénéisation. En effet, cette étape entraîne une réduction suffisante des particules (70 µm en moyenne) pour surmonter les problèmes organoleptiques rencontrés jusqu'alors avec ce type de composés. En outre, leur plus faible granulométrie leur permet de se maintenir après traitement thermique en suspension dans le mix constituée par exemple d'un lait légèrement épaissi. Selon un mode de réalisation avantageux, la composition fluide (mix) consiste en du lait écrémé 95%, de la poudre de lait écrémé 3%, de l'amidon modifié 2%.

La suspension est pompée *via* une pompe positive (type PCM), ou *via* une pompe haute pression, puis injectée en ligne avant l'étape d'homogénéisation. Deux circuits se rejoignant ainsi avant l'étape d'homogénéisation, le circuit contenant la suspension et le circuit contenant la composition fluide. On prend soin que la pompe amenant la suspension puisse générer suffisamment de pression pour permettre d'injecter la totalité de la suspension dans la composition fluide.

Après l'étape d'homogénéisation, le produit résultant de ce mélange est pasteurisé selon un couple temps/température qui permet, d'une part, de réduire la charge microbienne initiale et, d'autre part, de développer le potentiel texturant des épaississants (cas de l'amidon), pour maintenir en suspension les fines particules de phytostérol.

On peut ajuster les deux débits, en fonction de la quantité de suspension à introduire. Par exemple, si on veut introduire 2% de poudre biologiquement active dans le produit fini et ce, par l'intermédiaire d'une suspension contenant 25% de cette poudre, il faudra que le débit de la suspension soit de 8% celui de la composition fluide.

La pression d'homogénéisation peut varier entre 50 et 500 bars. En dessous de cette valeur, l'effet cisaillant n'est pas suffisant pour bien réduire la taille des particules de phytosterol (ou de substances) et assurer un bon mélange avec la composition fluide. Au-dessus de cette valeur, on endommage l'appareil. L'intensité du traitement thermique appliqué est généralement comprise entre 85°C et 130°C pendant 30 secondes à 8 minutes.

Dans ce procédé à l'issue de l'étape d'homogénéisation, on pasteurise la dispersion homogénéisée stable à une température allant de 85°C à 130°C, puis on refroidit à une température de 4°C à 45°C.

Dans ce procédé à l'issue de l'étape de pasteurisation, on ensemence la dispersion homogénéisée stable pasteurisée à la température de 35°C à 45°C, ce qui permet le développement optimal des bactéries lactiques, puis on fermente.

L'ensemencement avec des bactéries lactiques permet de fabriquer des yoghourts et des laits fermentés et procéder à une fermentation lactique selon les méthodes connues de l'homme du métier.

Dans ce procédé à l'issue de l'étape d'homogénéisation, on stérilise la dispersion homogénéisée stable à une température de 90°C à 130°C, puis on refroidit à une température de 70°C à 4°C.

Ce procédé permet d'obtenir des compositions alimentaires sucrées.

Il est en effet possible d'ajouter à la dispersion homogénéisée mentionnée ci-dessus des excipients connus de l'homme de métier, tels que ceux choisis parmi des aromatisants, des édulcorants ou des colorants.

### FIGURE :

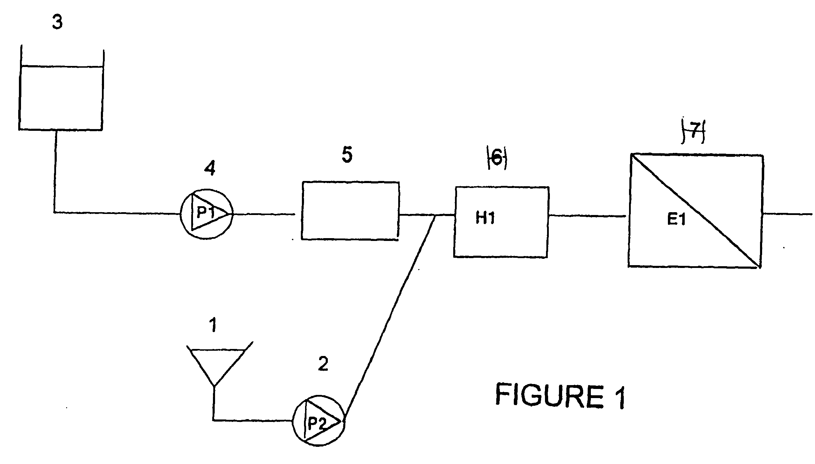

- La Figure 1 représente un procédé schématique exclu de l'invention.

Le bac contenant la suspension de phytostérol est représenté par (1).

La pompe d'envoi de la suspension du phytostérol est symbolisée par P2 et représentée par (2) ; elle permet de régler le débit de la suspension de phytostérol.

On a représenté par (3) le bac contenant la composition fluide (mix) et par (4) la pompe d'envoi de la composition fluide (symbolisée par P1), qui permet de régler le débit.

En (5) on a représenté le préchauffeur de la composition fluide (traitement thermique à une température de 60 à 80°C pour permettre une bonne homogénéisation).

La suspension de phytostérol et la composition fluide sont mélangées juste après le préchauffage de la composition fluide et juste avant l'étape d'homogénéisation du mélange, à l'aide d'un homogénéisateur qui permet de réduire la taille des particules de phytostérol à une valeur de 50 µm à 100 µm.

Après l'étape d'homogénéisation, le produit résultant du mélange
- soit est pasteurisé selon un couple temps/température qui permet, d'une part, de supprimer la charge microbienne et, d'autre part, de développer le potentiel texturant des épaississants,
- soit est stérilisé à une température de 90°C à 130°C, pendant 1 min, puis refroidi à une température de 50°C à 4°C.

### EXEMPLES

### Example 1 de référence : Préparation de yoghourt écrémé avec 0,5% de β-sitostérol

Dix pour cent de β-sitostérol sont mis en suspension dans l'eau additionnée de xanthane à 0,3%. L'homogénéisation manuelle à l'aide d'un fouet permet d'obtenir une pâte pompable. La pâte obtenue est injectée dans le circuit de la composition fluide (mix) préparée selon la formule suivante :
- lait à 0% de matière grasse 95 %
- poudre de lait écrémé 3 %
- amidon modifié 2%.

Le débit de la pompe d'injection, P2 de la pâte est calé à 5% du débit de la pompe, P1 convoyant la composition fluide (mix). Les deux circuits se regroupent pour être homogénéisés dans H1 à une température de 75°C et à une pression de 200 bars (homogénéisateur Rannie). Le mélange obtenu est pasteurisé pendant 10 minutes à 95°C, puis refroidi à 45°C sur l'échangeur E1. Le tout est récupéré en container stérile. On ensemence avec une culture de ferments lactiques, et on conduit la fermentation jusqu'à l'obtention d'un pH de 4.5. Le produit est alors brassé, puis refroidi dans un échangeur à plaques, puis conditionné en pots individuels. Le produit ainsi obtenu peut aussi être mélangé avec une préparation de fruits avant d'être conditionné ou dosé par dessus une préparation de fruits au moment du conditionnement.

### Exemple 2 de référence : Préparation d'une crème dessert contenant 0,5% β-sitostérol

La suspension aqueuse de β-sitostérol est préparée selon le mode décrit dans l'exemple 1. On injecte la pâte ainsi obtenue comme décrit dans l'exemple 1. Cependant, la pression d'homogénéisation est ici réduite à 50 bars, et la composition de la composition fluide (mix) est la suivante :
- lait à 0% de matière grasse 67,92%
- crème à 40% de matière grasse 12%
- carraghénanes 0,05%
- amidon modifié 4,0%.
- poudre de lait écrémé 4%
- sucre 12%
- arôme vanille 0,01%
- colorant 0,01%.

On applique ensuite un traitement thermique à 130°C pendant 1 minute sur E1, puis on refroidit à 10°C avant de conditionner en pots individuels.

On peut également ajouter du cacao dans la composition fluide (mix) pour obtenir une crème au chocolat.

### Exemple 3 de référence : Préparation d'un yoghourt entier (3,7% de matière grasse) 0,8% de β-sitostanol

Quinze pour cent de β-sitostanol sont mis en suspension dans de l'eau additionnée de xanthane à 0,3% et d'huile (5%), puis on homogénéise manuellement à l'aide d'un fouet. Il en résulte une pâte pompable.

La pâte est injectée dans le circuit de la composition fluide (mix) préparée selon la formule suivante :
- lait entier 95%
- poudre de lait écrémé 3 %
- amidon modifié 2%.

Le débit de la pompe d'injection, P2 de la pâte est calé à 5.33% du débit de la pompe P1 convoyant la composition fluide. Les deux circuits se regroupent pour être homogénéisés à une température de 75°C et à une pression de 200 bars (homogénéisateur Rannie). Le mélange obtenu est pasteurisé pendant 10 minutes à 95°C, puis refroidi à 45°C sur E1.

Le tout est récupéré en container stérile. On ensemence avec une culture de ferments lactiques, et on conduit la fermentation jusqu'à l'obtention d'un pH de 4.5. Le produit est alors brassé, puis refroidi dans un échangeur à plaques, puis conditionné en pots individuels.

Le produit ainsi obtenu peut aussi être mélangé avec une préparation de fruits avant d'être conditionné ou dosé par dessus une préparation de fruits au moment du conditionnement.

### Exemple 4 de référence : Préparation de produit végétal enrichi en β-sitostérol

La suspension aqueuse de β-sitostérol est préparée selon le mode décrit dans l'exemple 1. On injecte la pâte ainsi obtenu comme décrit dans l'exemple 1, dans la composition fluide ; mais, le lait est substitué par une préparation liquide végétale à base de céréales comme l'avoine, l'orge, le riz ou le blé ou par du lait de soja, ou par le mélange des deux. On peut aussi remplacer la poudre de lait écrémé par une poudre de protéine de soja ou une poudre d'avoine.

On obtient ainsi soit des produits fermentées 100% végétaux, soit des crèmes desserts 100% végétaux.

### Conservation du β-sitostérol dans les produits

Yoghourt, cible = 0,45% de β-sitostérol, dosage dans les pots :
- T+0 jour : 0,42%, 0,41%
- T+15 jours : 0,42%, 0,42%
- T+30 jours : 0,42% , 0,41%

Crème dessert cible = 0,50% de β-sitostérol, dosage dans les pots :
- T+0 jour : 0,47%, 0,47%
- T+15 jours : 0,49%, 0,49%
- T+30 jours : 0,51%, 0,52%

Yoghourt, cible = 0,4% de β-sitostanol, dosage des pots :

| | |
|---|---|
| Début production | 0,31% |
| Fin production | 0,38%. |

Les valeurs attendues sont proches des valeurs théoriques. De plus, le produit reste stable durant le processus, ainsi que durant la conservation produit.

Ces produits ont été faits par rapport à un produit témoin ne contenant pas de phytositostérol. La dégustation de ces produits fait ressortir une impression légèrement poudreuse, mais tout à fait acceptable due au phytositostérol. L'intensité aromatique n'est pas affectée.

## Revendications

1. Suspension homogène et stable dépourvue d'émulsifiant:
- d'au moins une substance hydrophobe et/ou dont le point de fusion est supérieur à 130°C choisie parmi les phystostérols, les phytostanols et leurs dérivés estérifiés respectifs et notamment les composés choisis parmi: 5,7,22-cholestatrienol, 7-dehydrocholesterol, 22-dehydrocholesterol, 24-dehydrocholesterol, zymosterol, Δ7-cholesterol, 7-coprostenol, cholestanol, coprostanol, epicoprostanol, cerebrosterol, 22-α-oxycholesterol, 22-dihydroerogosterol, 7,24(28)-erogostadienol, campesterol, neospongosterol,
7-ergostenol, cerebisterol, corbisterol, stigmasterol, focosterol, α-spinasterol, sargasterol, 7-dehydrocryonasterol, poriferasterol, chondrillasterol, β-sitosterol, cryonasterol (γ-sitosterol), 7-stigmasternol, 22-stigmastenol, dihydro-γ-sitosterol, β-sitostanol, 14-dehydroergosterol, 24(28)-dehydroergosterol, ergosterol, brassicasterol, 24-methylenecholesterol, ascosterol, episterol, fecosterol et 5-dihydroergosterol, et leurs mélanges et est avantageusement le β-sitostérol, le β-sitostanol, le β-sitostanol ester, le campesterol ou le brassicasterol,
- d'un épaississant choisi parmi : la gomme xanthane, les carraghénanes, les pectines, l'amidon, notamment gélatinisé, la gomme gélane ou la cellulose et ses dérivés à une concentration telle que la viscosité de la suspension est de 0,05 Pas à 0,15 Pas, notamment de 0,05 Pas à 0,1 Pas, et
- des lipides en quantité inférieure à 5%,
dans un milieu aqueux.

2. Suspension aqueuse selon la revendication 1, contenant de 0,01% (p/v) à 10% (p/v) d'épaississant et de 0,1 % (p/v) à 30% (p/v) de substance hydrophobe et/ou dont le point de fusion est supérieur à 130°C.

3. Suspension aqueuse selon l'une des revendications 1 ou 2, contenant de 0,5 à 20 % (p/v) de substance hydrophobe et/ou dont le point de fusion est supérieur à 130°C.

4. Procédé de préparation d'une suspension homogène stable selon l'une quelconque des revendications 1 à 3, dans lequel :
- on prépare une solution présentant une viscosité de 0,05 Pas à 0,15 Pas, en mélangeant une solution aqueuse avec un épaississant,
- on additionne à la solution visqueuse obtenue à l'étape précédente une substance hydrophobe et/ou dont le point de fusion est supérieur à 130°C, à une concentration telle que la concentration dans la solution visqueuse soit de 0, 1 % à 30% p/v
pour obtenir une suspension homogène stable dépourvue d'émulsifiant.

## Claims

1. Stable emulsifier free homogeneous suspension:
- of at least one hydrophobic substance and/or the melting point of which is higher than 130°C, chosen from phytosterols, phytostanols and their respective esterified derivatives, and especially compounds chosen from: 5,7,22-cholestatrienol, 7-dehydrocholesterol, 22-dehydrocholesterol, 24-dehydrocholesterol, zymosterol, Δ⁷-cholesterol, 7-coprostenol, cholestanol, coprostanol, epicoprostanol, cerebrosterol, 22-α-oxycholesterol, 22-dihydroerogosterol, 7,24(28)-erogostadienol, campesterol, neospongosterol,
7-ergostenol, cerebisterol, corbisterol, stigmasterol, focosterol, α-spinasterol, sargasterol, 7-dehydrocryonasterol, poriferasterol, chondrillasterol, β-sitosterol, cryonasterol (γ-sitosterol), 7-stigmasternol, 22-stigmastenol, dihydro-γ-sitosterol, β-sitostanol, 14-dehydroergosterol, 24(28)-dehydroergosterol, ergosterol, brassicasterol, 24-methylenecholesterol, ascosterol, episterol, fecosterol and 5-dihydroergosterol, and their mixtures and is advantageously β-sitosterol, β-sitostanol, β-sitostanol ester, campesterol or brassicasterol,
- of a thickener, chosen from: xanthan gum, carrageenans, pectins, starch, especially gelatinised, gelane gum, or cellulose and its derivatives in such a concentration that the viscosity of the suspension is 0.05 Pas to 0.15 Pas, especially 0.05 Pas to 0.1Pas, and
- of lipids in a quantity lower than 5%,
in an aqueous medium.

2. Aqueous suspension according to claim 1, containing from 0.01% (p/v) to 10% (p/v) of thickener and from 0.1% (p/v) to about 30% (p/v) of hydrophobic substance and/or of which melting point is higher than about 130°C.

3. Aqueous solution according to claim 1 or 2, containing from 0.5 to 20% (p/v) of hydrophobic substance and/or the melting point of which is higher than about 130°C.

4. Preparation process of a stable homogeneous suspension according to any of claims 1 to 3, in which:
- a solution with a viscosity of 0.05 Pas to 0.15 Pas is prepared, by mixing an aqueous solution with a thickener,
- a hydrophobic substance and/or the melting point of which is higher than 130°C, is added to the viscous solution obtained in the preceding stage, to such a concentration that the concentration in the viscous solution is from 0.1% to 30% p/v to obtain a stable homogeneous emulsifier free suspension.

## Patentansprüche

1. Stabile homogene Suspension ohne Emulgiermittel:
- mit wenigstens einer Substanz, die hydrophob ist und/oder deren Schmelzpunkt oberhalb von 130°C liegt, aus den Phytosterolen, den Phytostanolen und deren jeweiligen veresterten Derivaten ausgewählt ist, und insbesondere aus den Verbindungen, die aus den folgenden ausgewählt sind :
5, 7, 22-Cholestatrienol, 7-Dehydrocholesterol, 22-Dehydrocholesterol, 24-Dehydrocholesterol, Zymosterol, Cholesterol, Δ⁷- Cholesterol, 7-Coprostenol, Cholestanol, Coprostanol, Epicoprostanol, Cerebrosterol, 22-α- Oxycholesterol, 22-Dihydroerogosterol, 7,24 (28)-Erogostadienol, Campesterol, Neospongosterol, 7-Ergostenol, Cerebisterol, Corbisterol, Stigmasterol, Focosterol, α-Spinasterol, Sargasterol, 7-Dehydrocryonasterol, Poriferasterol, Chondrillasterol, β-Sitosterol, Cryonasterol (γ-Sitosterol), 7-Stigmasternol, 22-Stigmastenol, Dihydro-γ-sitosterol, β-Sitostanol, 14-Dehydroergosterol, 24(28)-Dehydroergosterol, Ergosterol, Brassicasterol, 24-Methylencholesterol, Ascosterol, Episterol, Fecosterol und 5-Dihydroergosterol und ihre Mischungen, vorteilhafter Weise β-Sitosterol, β-Sitostanol, β-Sitostanolester, Campesterol oder Brassicasterol,
- mit einem Verdickungsmittel das aus den folgenden ausgewählt ist:
Xanthangummi, Carrageene, Pektine, Stärke, insbesondere gelatiniert,
Gelangummi, oder Cellulose und deren Derivative eine derartige Konzentration besitzt, dass die Viskosität der Suspension 0,05 Pas bis 0,15 Pas beträgt, insbesondere 0,05 Pas bis 0,1 Pas beträgt und
- mit Lipiden in einer Menge unterhalb von 5% enthält
in einem wässrigen Milieu.

2. Wässrige Suspension gemäß Ansprüche 1 die von 0,01% (w/v) bis 10% (w/v) Verdickungsmittel und von 0,1% (w/v) bis 30% (w/v) der Substanz, die hydrophob ist und/oder deren Schmelzpunkt oberhalb von 130°C liegt, enthält.

3. Wässrige Suspension gemäß einem der Ansprüche 1 oder 2, die 0,5 bis 20% (w/v) der Substanz, die hydrophob ist und/oder deren Schmelzpunkt oberhalb von 130°C liegt, enthält.

4. Herstellungsverfahren für eine homogene stabile Suspension gemäß einem der Ansprüche 1 bis 3, in welchem:
- eine Lösung mit einer Viskosität von 0,05 Pas bis 0,15 Pas hergestellt wird, indem wässrige Lösung mit einem Verdickungsmittel vermischt wird,
- zu der in dem vorhergehenden Schritt erhaltenen viskosen Lösung eine Substanz, die hydrophob ist und/oder deren Schmelzpunkt oberhalb von 130°C liegt, gegeben wird, so dass die Konzentration in der viskosen Lösung 0,1 % bis 30% w/v beträgt,
um eine homogene stabile Suspension ohne Emulgiermittel zu erhalten.
